# EUROPÄISCHE PATENTSCHRIFT

(11) **EP 2 007 339 B1**
(45) Veröffentlichungstag und Bekanntmachung des Hinweises auf die Patenterteilung: **14.10.2015**
(21) Anmeldenummer: 07724221.2
(22) Anmeldetag: 13.04.2007
(51) Int. Cl.: A61H 1/00

(54) **SITZ**
SEAT
SIÈGE

(30) Priorität: 19.04.2006 DE 102006018184
(43) Veröffentlichungstag der Anmeldung: 31.12.2008
(73) Patentinhaber: Bayerische Motoren Werke Aktiengesellschaft, 80809 München (DE)
(72) Erfinder: LEIN, Rudolf, 85221 Dachau (DE); DURT, Alexander, 82266 Inning (DE); FRANZ, Matthias, 83098 Brannenburg (DE)
(74) Vertreter: Schernhammer, Herbert
(86) Internationale Anmeldenummer: PCT/EP2007/003281
(87) Internationale Veröffentlichungsnummer: WO 2007/121874

(56) Entgegenhaltungen:
- WO-A-2004/026623
- DE-A1- 19 910 877
- DE-B1- 1 566 516
- DE-C1- 4 331 663
- KR-A- 20050 018 913
- US-A- 5 135 282
- US-A1- 2006 217 644

## Beschreibung

Die Erfindung betrifft einen Sitz nach dem Oberbegriff des Anspruchs 1.

Aus der US 5,558,398 ist ein Sitz mit einer Rückenlehne bekannt, die eine Mehrzahl paarweise und symmetrisch zur Hochachse der Rückenlehne angeordneter Hubelemente aufweist.

Des Weiteren beschreibt die WO 2004/026623 A1 einen Sitz mit einer Mehrzahl druckbeaufschlagbarer Elemente in der Rückenlehne und im Sitzkissen, mit denen die Sitzkontur beeinflusst werden kann, zur Erzielung unterschiedlicher Massageeffekte.

Außerdem ist aus der DE 1 566 516 B ein Sitz mit einer Massageeinrichtung bekannt, zum Aufbringen einer Punktdruckbehandlung, die der Fingerdruckbehandlung eines Masseurs gleicht. Die Punktdruckbehandlung beginnt am Hals und erfasst nachfolgend kopfabwärts liegende Körperpartien.

Ferner ist aus der DE 199 10 877 A1 eine Vorrichtung an einem Sitz eines Fahrzeugs bekannt, mit in der Rückenlehne des Sitzes links und rechts der Wirbelsäule eines Fahrers oder Fahrgastes hin- und herbewegbaren Elementen, die insbesondere auf die länglichen Bereiche der Rückenmuskulatur einwirken, um durch eine bewusste Stimulation bestimmter Muskelpartien ein Ungleichgewicht zwischen Inhibitoren und Stimulatoren zu verhindern, damit eine muskuläre und blutkreislaufmäßige Stabilisierung des Gesamtbefindens erzielt wird.

Aufgabe der Erfindung ist es, den aus der US 5,558,398 bekannten Sitz im Sinn einer verbesserten Mobilisation, insbesondere des Rückens des Sitzbenutzers, weiterzubilden.

Diese Aufgabe wird durch einen Sitz mit den Merkmalen des Anspruchs 1 gelöst.

Kerngedanke der Erfindung ist es, in der Rückenlehne des Sitzes Verstellelemente anzuordnen, die so beschaffen sind, dass sie eine Hubbewegung in Richtung etwa senkrecht zur Anlagefläche des Sitzbenutzers ausführen können. Die Verstellelemente sind an bestimmten Bereichen der Rückenlehne vorgesehen, um dort durch eine gezielte Zustellung auf den Sitzbenutzer eine aktive Bewegung des Rückens zu erreichen. Die Verstellelemente sind rechts und links der Wirbelsäule des Sitzbenutzers, bevorzugt symmetrisch zur Längsmittenebene der Rückenlehne, angeordnet. In jedem Fall sind zwei Verstellelemente im oberen Bereich der Rückenlehne vorgesehen, also in dem Bereich, der der Schulter eines Sitzbenutzers gegenüberliegt. Diese beiden Verstellelemente im Schulterbereich werden ergänzt durch zwei mittlere Verstellelemente im Brustbereich des Sitzbenutzers und/oder durch zwei Verstellelemente im unteren Bereich der Rückenlehne, der dem Lendenbereich eines Sitzbenutzers gegenüberliegt. Durch die erfindungsgemäße Anordnung der Verstellelemente in den beschriebenen Bereichen der Rückenlehne, die bestimmten Regionen des Rückens des Sitzbenutzers entsprechen, kann durch eine Hubbewegung der Verstellelemente eine gezielte aktive Bewegung des Rückens (sowie einzelner Wirbelsäulenabschnitte oder Wirbelsegmente des Rückens) erreicht werden, wie nachfolgend näher beschrieben.

Durch eine erfindungsgemäße Ansteuerung werden die Verstellelemente so aktiviert, dass der Rücken eines Sitzbenutzers rotatorisch mobilisiert wird. Durch diese aktive rotatorische Mobilisation wird eine Bewegung des Rückens erzeugt, die der Bewegung der Wirbelsäule beim Gehen entspricht, damit also einen natürlichen Bewegungsablauf nachbildet, der von einem Sitzbenutzer in seiner statischen Haltung nicht selbst aktiv ausgeführt werden kann. Durch die von den Verstellelementen auf den Rücken ausgeübte Verdrehbewegung kann Ermüdungserscheinungen und Verspannungen in äußerst wirkungsvoller Weise entgegengewirkt werden.

Die Verstellelemente bewirken - ausreichender Hubweg vorausgesetzt - eine Mobilisation einzelner Wirbel gegeneinander bzw. eine Mobilisation von Wirbelsegmenten. Der beaufschlagte Wirbel bzw. das beaufschlagte Wirbelsegment erfährt eine Mikrobewegung gegenüber dem benachbarten Wirbel bzw. Wirbelsegment. Diese Mikrobewegung ist aus der "manuellen Therapie" der Wirbelsäule in der Medizin bekannt und wird erfolgreich zur Mobilisation von Wirbeln bzw. Wirbelsegmenten eingesetzt, um eine Bewegungsverbesserung zu erreichen, die sich als Komfortsteigerung spürbar äußert.

Die rotatorische Mobilisation wird bevorzugt durch vier oder sechs Verstellelemente in der Rückenlehne erreicht, die den Rücken des Sitzbenutzers verdrehen. Hierbei werden, wie oben beschrieben, die Verstellelemente im Schulterbereich zusammen mit den Verstellelementen im Thorax- und/oder Lendenbereich in geeigneter Weise angesteuert.

In einer bevorzugten Ausführungsform der Erfindung sind die Verstellelemente in den seitlichen Randbereichen der Rückenlehne derart angeordnet; dass sie den Rücken des Sitzbenutzers in einem möglichst weit außen liegenden Bereich aktiv bewegen können, um eine möglichst große Hebelwirkung zu erreichen. Selbstverständlich sind die Verstellelemente so zu platzieren, dass sie auch bei kleineren und schmaleren Sitzbenutzern noch wirkungsvoll arbeiten können.

In einer vorteilhaften Ausgestaltung der Erfindung werden die Verstellelemente in der Rückenlehne durch Verstellelemente im Sitzkissen ergänzt, wie an sich aus der DE 197 26 409 A1 bekannt. Diese Druckschrift beschreibt ein Sitzkissen mit zwei Verstellelementen, die eine Hubbewegung in einer Richtung etwa senkrecht zur Oberfläche des Sitzkissens durchführen. Die Verstellelemente werden alternierend bewegt und erzeugen hierdurch eine Kippbewegung des Beckens eines Sitzbenutzers, ähnlich der Bewegung des Beckens beim Gehen.

Durch diese Kombination von Verstellelementen in Rückenlehne und Sitzkissen, in Verbindung mit einer entsprechenden Ansteuerung, wird eine dreidimensionale Rotationsbewegung von Rücken und Becken erreicht, indem die Verstellelemente in der Rückenlehne zusammen mit den Verstellelementen im Sitzkissen eine gegenläufige Verstellbewegung ausüben. Diese Ergänzung der Rotationsbewegung des Rückens durch die Kippbewegung des Beckens ist für eine gesamthafte Mobilisierung der Wirbelsäule des Sitzbenutzers besonders vorteilhaft. Diese rotatorische Mobilisation ist der Rotationsbewegung nachgebildet, die der Rücken und das Beckens beim Gehen ausführen.

In der beschriebenen Ausführung der Erfindung sind also vier bzw. sechs Verstellelemente in der Rückenlehne des Sitzes und mindestens zwei weitere Verstellelemente im Sitzkissen vorgesehen. Selbstverständlich kann im Sitz auch eine hiervon abweichende Zahl von Verstellelementen verbaut sein.

Es können Verstellelemente mit unterschiedlicher Größe und/oder mit unterschiedlichem mechanischem Aufbau und/oder mit unterschiedlicher Geometrie eingesetzt werden.

Grundsätzlich sind die Verstellelemente symmetrisch in der rechten und linken Hälfte des Sitzes angeordnet. Davon abweichend ist jedoch auch eine zumindest abschnittsweise asymmetrische Verteilung der Verstellelemente denkbar, je nach Ausgestaltung des Sitzes.

Die Verstellelemente sind bevorzugt zwischen der Basisbefederung, also der Kraft aufnehmenden Struktur des Sitzes, und der Polsterung des Sitzes, in der Regel einem Schaummaterial, angeordnet. Durch diese Platzierung der Verstellelemente zwischen,Rahmen und Sitzschaum wird verhindert, dass die Verstellelemente in Komfort mindernder Weise punktuell auf den Rücken und gegebenenfalls auf das Gesäß des Sitzbenutzers einwirken. Vielmehr wird durch die beschriebene Anordnung eine großflächigere Druckverteilung erreicht, ohne ein zu starkes punktuelles Einwirken der Verstellelemente auf den Körper des Sitzbenutzers. Gleichzeitig gewährleistet die beschriebene Anordnung der Verstellelemente jedoch eine ausreichend präzise lokalisierte Krafteinwirkung auf den Rücken und gegebenenfalls das Gesäß des Sitzbenutzers.

Ergänzend zu den Verstellelementen ist in einer weiteren Ausführungsform der Erfindung in der Rückenlehne eine Mehrzahl von übereinander angeordneten Massageelementen vorgesehen, wie an sich aus der DE 38 30 235 C2 oder der DE 201 08 345 U1 bekannt. Im Fall der DE 38 30 235 C2 werden die Massageelemente so angesteuert, dass durch eine fortschreitende Beaufschlagung benachbarter Massageelemente eine walzenartige, entlang der Höhenerstreckung der Rückenlehne durchlaufende Wellenbewegung entsteht.

Die auf den Rücken eines Sitzbenutzers aufgebrachte Wellenbewegung bewirkt eine Massage der Muskulatur entlang der Wirbelsäule, vorwiegend der Muskelstränge neben der Wirbelsäule. Durch diese direkte mechanische Einwirkung auf die Muskulatur wird die Durchblutung der Rückenmuskulatur gesteigert, mit der Folge einer Regeneration und einer sich anschließenden Entspannung der Muskulatur, einschließlich der umgebenden Körperstrukturen (Knorpel, Bänder, Sehnen). Außerdem wird durch die aufgebrachte Wellenbewegung die Wirbelsäule leicht bewegt, im Sinn eines periodischen Aufrichtens des Rückens. Diese Bewegung der Wirbelsäule verstärkt die positiven Auswirkungen der rotatorischen Mobilisation, indem auch hier wechselnde Drücke auf die Bandscheiben entstehen, mit der Folge einer verbesserten Versorgung der Bandscheibenknorpel.

Der erfindungsgemäße Sitz lässt sich besonders vorteilhafter Weise in Kraftfahrzeugen anwenden, da hier in vielen Fällen der Benutzer über einen längeren Zeitraum statisch auf dem Sitz verharrt und aufgrund der Gegebenheiten in einem Fahrzeug, im Fall des Fahrers auch aufgrund des Verkehrsgeschehens, eine eigene aktive Bewegung nicht ermöglicht. Durch die rotatorische Mobilisation wird die Wirbelsäule in einer Weise bewegt, die dem natürlichen Bewegungsablauf beim Gehen entspricht. Diese Bewegung hat zur Folge, dass wechselnde Drücke auf die Bandscheiben entstehen, welche die Nährstoffversorgung für den Bandscheibenknorpel über einen Diffusionsvorgang begünstigen. Unter dieser wechselnden Belastung der Bandscheiben wird also deren Regeneration gefördert. Außerdem wirkt die rotatorische Mobilisation auch auf die Muskulatur, so dass Muskelverspannungen erfolgreich vermieden oder zumindest reduziert.

Die Hubbewegungen der Verstellelemente sind zu begrenzen, um auszuschließen, dass die Hubbewegungen über die Arme an das Lenkrad weitergeleitet werden, wodurch eine negative Beeinflussung der Fahraktivitäten entstünde. Neben dieser direkten Bewegungseinleitung über die Arme des Fahrers ist bei der Bemessung der Hubbewegungen auch zu beachten, dass die Bewegungsrezeptoren in den Armen des Fahrers nicht angesprochen werden, um keine Ablenkung beim Fahren hervorzurufen.

Vorteilhafte Ausgestaltungen der Erfindung sind Gegenstand der Unteransprüche.

Ein mögliches Ausführungsbeispiel der Erfindung ist in der Zeichnung dargestellt und wird nachfolgend näher erläutert. Es zeigt:
- Fig. 1: ein erstes Ausführungsbeispiel eines erfindungsgemäßen Sitz in perspektivischer Darstellung, mit einer Mehrzahl von schematisch dargestellten Verstellelementen und Massageelementen,
- Fig. 2 bis 5: der Fig. 1 entsprechende Darstellungen, mit alternativen Ausführungsformen und Anordnungen von Verstellelementen,
- Fig. 6: Ablaufschemata zur Erzeugung verschiedener Rotationsbewegungen durch die Verstellelemente,
- Fig. 7: Ablaufschemata zur Erzeugung verschiedener Massageeffekte durch die Massageelemente und
- Fig. 8: ein Diagramm zur Darstellung des zeitlichen Ablaufs der Rotation und der Massage.

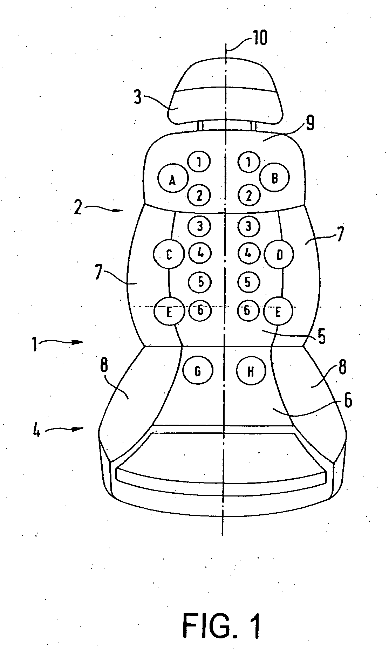

Fig. 1 zeigt einen in seiner Gesamtheit mit 1 bezeichneten Sitz mit einer Rückenlehne 2, einer Kopfstütze 3 und einem Sitzkissen 4. An mittige Anlageflächen 5 und 6 von Rückenlehne 2 und Sitzkissen 4 schließen sich seitliche Wangen 7 und 8 von Rückenlehne 2 und Sitzkissen 4 an. Im oberen Bereich der Rückenlehne 2 ist ein Schulterabschnitt 9 ohne seitliche Wangen vorgesehen. Die Längsmittenebene des Sitzes 1 ist mit 10 bezeichnet.

Erfindungsgemäß sind in der Rückenlehne 2 sechs Verstellelemente A bis F vorgesehen, wobei die Verstellelemente A, C und E spiegelbildlich zu den Verstellelementen B, D und F angeordnet sind. Damit weist die rechte und die linke Seite des Sitzes 1 jeweils eine Reihe übereinander angeordneter Verstellelemente A, C, E bzw. B, D, F auf. Die Verstellelemente A bis F können individuell angesteuert werden.

Die Verstellelemente A und B sind im Schulterbereich der Rückenlehne 2 angeordnet, relativ weit außen liegend und, bezogen auf die Höhenerstreckung des Schulterabschnittes 9, etwa mittig im Schulterabschnitt 9. Die Verstellelemente C und E bzw. D und F sind jeweils im Übergangsbereich zwischen den mittigen Anlageflächen 5 und den Wangen 7 der Rückenlehne 2 angeordnet. Hierbei befinden sich die Verstellelemente C und D etwa in der Mitte der Höhenerstreckung der Rückenlehne 2, also im Brustbereich eines zugeordneten Benutzers des Sitzes 1. Die Verstellelemente E und F sind im unteren Abschnitt der Rückenlehne 2 angeordnet und damit dem Lendenbereich eines Benutzers zugeordnet.

Das Sitzkissen 4 weist zwei Verstellelemente G und H auf, die etwa symmetrisch zur Längsmittenebene 10 angeordnet sind. Die Verstellelemente G und H sind in demjenigen Bereich des Sitzkissens 4 angeordnet, der den Sitzbeinhöckern eines Sitzbenutzers gegenüberliegt.

Die Verstellelemente A bis H sind verdeckt unterhalb der Anlagefläche des Sitzbenutzers mit dem Sitz 1 angeordnet. Sie befinden sich bevorzugt zwischen der Basisbefederung und der Polsterung des Sitzes. Die Verstellelemente A bis H sind als Hubelemente ausgeführt und führen eine Bewegung in etwa senkrecht zur Anlagefläche des Insassen am Sitz 1 aus. Damit wird eine Kraft und in der Folge eine Bewegung auf den Rücken bzw. das Gesäß eines Sitzbenutzers ausgeübt. Mit der Hubbewegung der Verstellelemente A bis H wird nur in geringem Umfang eine Massagewirkung beabsichtigt und erreicht. Vielmehr steht die Mobilisation der Wirbelsäule im Vordergrund.

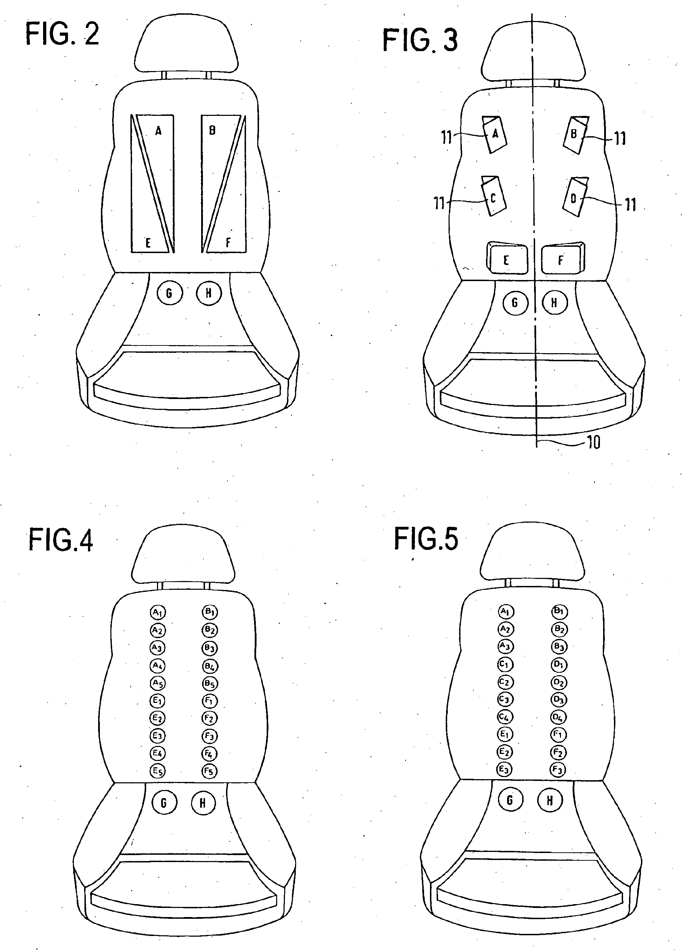

Fig. 1 zeigt eine besonders bevorzugte Anordnung der Verstellelemente A bis F, wobei die Darstellung insbesondere hinsichtlich der Form der Verstellelemente A bis F abstrahiert ist. Die Fig. 2 bis 5 zeigen alternative Anordnungen und Formgestaltungen von Verstellelementen.

In Fig. 2 sind pyramidenförmige Verstellelemente A, B, E und F dargestellt, mit dreieckförmigen Seitenflächen in der Vorderansicht des Sitzes 1. Bei Aktivierung eines der Verstellelemente A, B, E oder F entsteht ein keilförmiges Gebilde, mit maximalem Hub im Bereich der Grundseite der dreieckförmigen Seitenfläche. Der maximale Hub entspricht dem Hub der Verstellelemente A, B, E und F aus Fig. 1, wobei jedoch durch das keilförmige Auslaufen der Verstellelemente A, B, E und F in Richtung des vertikal darunter- oder darüberliegenden Verstellelements ein weicher Übergang erfolgt.

Fig. 3 zeigt eine weitere praxisnahe Ausgestaltung von Verstellelementen A bis F, die die Form von Keilen aufweisen. In der deaktivierten Position der Verstellelemente A bis F sind diese im Wesentlichen flache, in der Draufsicht rechteckförmige Gebilde. Bei Aktivierung der Verstellelemente A bis F "klappen" diese entlang ihrer der Längsmittenebene 10 des Sitzes 1 zugewandten Schmalseiten 11 auf. Damit ergibt sich ein maximaler Hub der Verstellelemente A bis F in den seitlich außen liegenden Bereichen der Rückenlehne 2, entsprechend der Darstellung der Fig. 1. Die Keilform der Verstellelemente A bis F ist bei vergleichsweise ebenen Rückenlehnen 2 von Vorteil, da bei solchen Rückenlehnen 2 ein keilförmiger Abstand zwischen der ebenen Anlagefläche der Rückenlehne 2 und dem in seinen Randbereichen gewölbten Rücken eines Sitzbenutzers vorliegt. Dieser keilförmige Abstand wird durch die keilförmigen Verstellelemente A bis F in vorteilhafter Weise ausgeglichen. Außerdem wird durch die keilförmigen Verstellelemente A bis F erreicht, dass die Hubbewegung senkrecht zum Rücken des Insassen aufgebracht wird. Zudem sind die Schmalseiten 11 der Verstellelemente C und D gegenüber der Längsmittenebene 10 etwas angestellt, um im Thoraxbereich eine besonders gute Anpassung an den Rücken des Sitzbenutzers zu erreichen.

Bei der Rückenlehne 2 gemäß Fig. 4 sind anstelle jedes der Verstellelemente A bzw. B bzw. E bzw. F von Fig. 1 jeweils fünf Verstellelemente A₁, A₂, A₃, A₄, A₅ bzw. B₁, B₂, B₃, B₄, B₅ bzw. E₁, E₂, E₃, E₄, E₅ bzw. F₁, F₂, F₃, F₄, F₅ vorgesehen. Durch diese Untergliederung kann durch abgestufte Hubwege ein ähnlicher Effekt erreicht werden wie bei den pyramidenförmigen Verstellelementen A, B, E und F gemäß Fig. 2, nämlich ein fließendes Auslaufen, ausgehend von den Verstellelementen A₁, B₁, E₅ bzw. F₅ mit maximalem Hub. Alternativ können auch die Verstellelemente A₃, B₃, E₃ bzw. F₃ einen maximalen Hub ausführen.

Analoges gilt gemäß Fig. 5 für die Verstellelemente A₁ bis F₃. Wie anschaulich aus Fig. 5 hervorgeht, sind anstelle jedes der Verstellelemente A bis F von Fig. 1 jeweils drei oder vier Verstellelemente A₁, A₂, A₃ bis F₁, F₂, F₃ vorgesehen, um durch eine entsprechend abgestufte Ansteuerung weiche Übergänge zu erreichen.

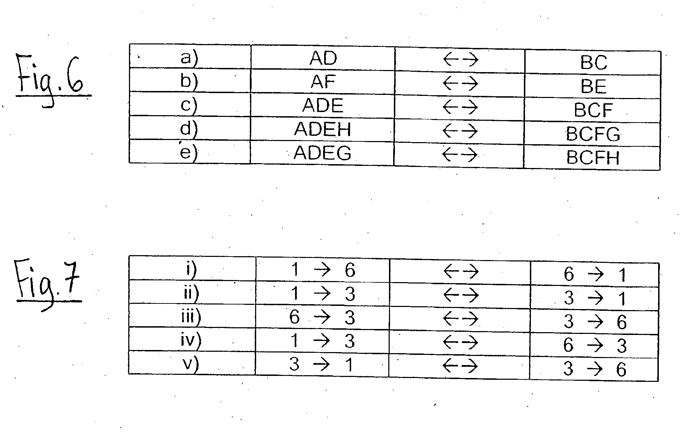

Fig. 6 zeigt in tabellarischer Übersicht bevorzugte Ansteuerungen der Verstellelemente A bis H, um eine rotatorische Mobilisation des Rückens bzw. des Rückens und des Beckens zu erreichen.

Beim Verstellmuster a) werden die Verstellelemente A und D sowie B und C alternierend aktiviert, so dass jeweils schräg gegenüberliegend, also höhenversetzt in der rechten und der linken Hälfte der Rückenlehne 2, eine Zustellbewegung auf den Rücken des Sitzbenutzers erfolgt. Hierdurch wird eine "einfache Rotation" des Rückens erreicht. Diese durch zwei diagonal gegenüberliegende Verstellelemente erzeugte Rotationsbewegung des Rückens ist relativ stark ausgeprägt.

Anstelle der Verstellelemente C und D können auch die Verstellelemente E und F aktiviert werden, mit dem gleichen Effekt wie oben beschrieben, jedoch mit einem größeren Abstand zwischen den nunmehr im Schulterbereich und im Lendenbereich angeordneten Verstellelementen A, B bzw. E, F. Hierbei ergibt sich das Verstellmuster b).

In der nächsten Stufe c) der Mobilisation werden die Verstellelemente A, D und E im Wechsel mit den Verstellelementen B, C und F betätigt. Mit anderen Worten wird jeweils ein Schulterhubelement A bzw. B und ein Lendenhubelement E bzw. F in der rechten bzw. der linken Hälfte der Rückenlehne 2 zusammen mit einem Thoraxhubelement D bzw. C in der linken bzw. rechten Hälfte der Rückenlehne 2 aktiviert. Hierdurch wird im Unterschied zur oben beschriebenen "einfachen Rotation" eine "Segmentrotation" erreicht. Bei der "Segmentrotation" sind immer mindestens drei Verstellelemente beteiligt, wobei die Verdrehung des Rückens im Vergleich zur einfachen Rotation reduziert wird, da der Rücken nur eine verringerte Rotationsbewegung zum mittleren Verstellelement C bzw. D im Thoraxbereich ausführt. Hierdurch wird die Bewegung des Schultergürtels erheblich reduziert, mit Vorteilen hinsichtlich der Übertragung der Hubbewegung in die Arme des Fahrers eines Kraftfahrzeugs.

Durch Kombination der vier bzw. sechs Verstellelemente A bis F in der Rückenlehne 2 mit den beiden Verstellelementen G und H im Sitzkissen 4 kann eine dreidimensionale Bewegungsbeaufschlagung des Sitzbenutzers erreicht werden. Hierzu werden die Verstellelemente A, D und E in der Rückenlehne 2 zusammen mit dem Verstellelement H im Sitzkissen 4 bewegt, so dass bei diesem Verstellmuster d) eine "Zickzacklinie" von aktivierten Verstellelementen entsteht. Die Betätigung der Verstellelemente B, C, F und G erfolgt im periodischen Wechsel.

Das Verstellmuster d) bildet den physiologischen Bewegungsablauf von Wirbelsäule und Becken nach, wie er beim Gehen stattfindet.

Gemäß dem Verstellmuster e) kann die Aktivierung der Verstellelemente A, D und E auch mit der Aktivierung des Verstellelementes G kombiniert werden, abwechselnd mit einer Aktivierung der Verstellelemente B, C, F und H.

Durch die oben beschriebenen Aktivierungsmuster wird auf den Rücken und gegebenenfalls das Becken eines Sitzbenutzers eine vornehmlich durch Rotation bestimmte Bewegung aufgebracht, die der natürlichen Bewegung beim Gehen nachempfunden ist. Hierdurch wird ein anatomisch sinnvoller Bewegungsablauf von außen auf den an sich statisch sitzenden Insassen aufgebracht, der die Wirbelsäule - und das Becken mobilisiert und Muskelverspannungen entgegenwirkt.

Im Mittenbereich 5 der Rückenlehne sind zusätzlich zwei Reihen von Massageelementen 11 bis 16 angeordnet, jeweils mit gleichem Abstand rechts und links von der Längsmittenebene 10.

Fig. 7 gibt in tabellarischer Form fünf mögliche Abläufe i) bis v) zur Aktivierung der Massageelemente 11 bis 16 wieder.

Gemäß Ablauf i) wird eine von oben nach unten entlang des Rückens eines Sitzbenutzers durchlaufende Wellenbewegung erzeugt, im Wechsel mit einer von unten nach oben durchlaufenden Wellenbewegung.

Alternativ kann sich gemäß Ablauf ii) bzw. iii) die Wellenbewegung auch nur in der oberen oder in der untern Hälfte der Rückenlehne 2 abspielen.

Beim Ablauf iv) gemäß Fig. 7 erfolgt zunächst eine Wellenbewegung von oben bis zur Mitte der Rückenlehne 2 und anschließend eine Wellenbewegung von unten, wiederum bis zur Mitte der Rückenlehne 2. In bevorzugter Ausgestaltung der Erfindung erfolgen diese beiden Wellenbewegungen gleichzeitig, so dass an der Rückenlehne 2 eine von oben und von unten zur Mitte hin laufende Welle entsteht.

Beim Ablauf v) gemäß Fig. 7 geht die Wellenbewegung von der Mitte der Rückenlehne 2 aus, nach oben bzw. nach unten. Auch hier verläuft die Bewegung bevorzugt gleichzeitig nach beiden Richtungen.

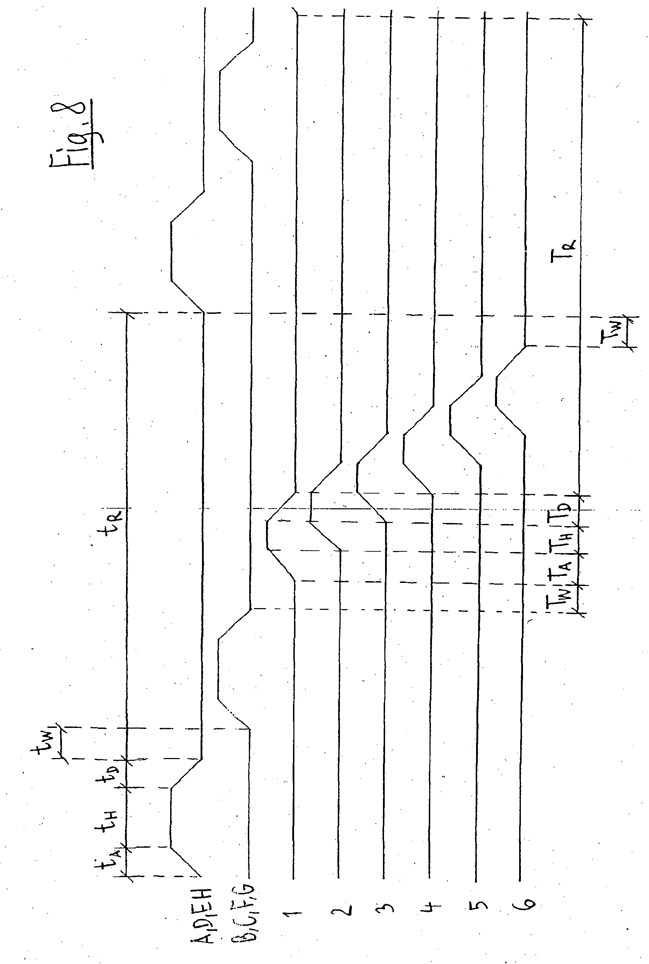

Fig. 8 gibt einen möglichen zeitlichen Ablauf der Aktivierung der Verstellelemente A bis H sowie der Massageelemente 1 bis 6 wieder. Die Zeitangaben sind rein beispielhaft.

Die Verstellelemente A, D, E, H erreichen innerhalb einer Aktivierungszeit t_{A} von 5 Sekunden ihren maximalen Hub. Die Haltezeit t_{H} beträgt 10 Sekunden. Daran schließt sich eine Deaktivierungszeit t_{D} von wiederum 5 Sekunden an. Der nächste Zyklus beginnt nach eine Ruhezeit t_{R} von 150 Sekunden.

Nach Beendigung des Hubzyklus der Verstellelemente A, D, E, H und einer Wartezeit t_{w} von 5 Sekunden beginnt der Hubzyklus der Verstellelemente B, C, F, G, bevorzugt mit denselben Parametern t_{A}, t_{H} und t_{D}.

Auf die Zyklen der Verstellelemente A bis H folgen die Massagezyklen der Massageelemente 1 bis 6, mit einer Wartezeit T_{W} von 5 Sekunden. Die Aktivierungszeiten T_{A}, die Haltezeiten T_{H} und die Deaktivierungszeiten T_{D} betragen jeweils 5 Sekunden. An die Deaktivierung des Massageelements 1 schließt sich ohne Wartezeit T_{W} unmittelbar die Aktivierung des Massageelements 2 an und so weiter. Nach dem Durchlauf des letzten Massageelements 6 beginnt nach einer Wartezeit T_{W} wieder die Aktivierung der Verstellelemente A, D, E, H.

Die Ruhezeit t_{R} zwischen zwei Hubzyklen der Verstellelemente A, D, E, H ist im vorliegenden Beispiel aufgrund der zwischengeschalteten Massagezyklen entsprechend lang. Bei einem Sitz 1 ohne Massageelemente 1 bis 6 oder bei deaktivierten Massageelementen 1 bis 6 ist die Ruhezeit t_{R} deutlich kürzer, um dem Sitzbenutzer keine länger andauernde Inaktivität des Sitzes 1 zu vermitteln.

Die beispielhaft angegebenen Zeiten können je nach Ausführung der Ansteuerung deutlich von den oben stehenden Angaben abweichen. Im Unterschied zum oben beschriebenen Ausführungsbeispiel, bei dem ein Massagezyklus 15 Sekunden dauert, kann die Zeitdauer eines Massagezyklus beispielsweise zwischen 5 Sekunden und 120 Sekunden betragen. Selbstverständlich können, abweichend von der "symmetrischen" Gestaltung der Rotationszyklen und der Massagezyklen diese auch "asymmetrisch" ablaufen. Grundsätzlich können alle angegebenen Zeiten individuell bemessen werden. Wartezeiten tw und T_{W} können entfallen oder hinzukommen.

Der Hub der Verstellelemente A bis H beträgt beispielsweise 8 Zentimeter. Dieser Verstellweg ist jedoch nicht gleichzusetzen mit dem Hubweg, der am Rücken des Sitzbenutzers wirksam ist, da die Basisbefederung und die Polsterung des Sitzes 1 naturgemäß einen großen Teil des effektiven Hubweges aufbrauchen.

## Patentansprüche

1. Sitz (1), mit einer Rückenlehne (2) und einem Sitzkissen (4), mit einer Mehrzahl von Verstellelementen (A bis F) in der Rückenlehne (2), die innerhalb der einem Benutzer zugewandten Anlagefläche der Rückenlehne (2) angeordnet sind und eine etwa senkrecht zur Anlagefläche gerichtete Hubbewegung durchführen können,
**dadurch gekennzeichnet, dass** eine Ansteuerung vorgesehen ist, durch die die Verstellelemente (A bis F) in zeitlich aufeinander abgestimmter Reihenfolge so aktiviert werden, dass auf den Rücken des Benutzers eine Rotationsbewegung aufgebracht wird, die der Rotationsbewegung des Rückens beim Gehen vergleichbar ist, wobei die Verstellelemente (A bis F) in folgenden Bereichen der Rückenlehne (2) angeordnet sind:
- im oberen Bereich (Schulterbereich),
- im mittleren Bereich (Thoraxbereich) und/oder
- im unteren Bereich (Lendenbereich),
mit wenigstens je einem Verstellelement (A bis F) in der rechten und in der linken Hälfte der Rückenlehne (2), wobei entweder
die Verstellelemente (A und D sowie B und C bzw. A und F sowie B und E) alternierend aktiviert werden, so dass jeweils schräg gegenüberliegend, also höhenversetzt in der rechten und der linken Hälfte der Rückenlehne (2), eine Zustellbewegung auf den Rücken des Sitzbenutzers erfolgt oder
jeweils ein Verstellelement im Schulterbereich (A bzw. B) und ein Verstellelement im Lendenbereich (E bzw. F) in der rechten bzw. der linken Hälfte der Rückenlehne (2) zusammen mit einem Verstellelement im Thoraxbereich (D bzw. C) in der linken bzw. rechten Hälfte der Rückenlehne (2) aktiviert wird, wobei die Verstellelemente (A, D und E bzw. B, C und F) im Wechsel betätigt werden.

2. Sitz (1) nach Anspruch 1,
**dadurch gekennzeichnet, dass** die Verstellelemente (A bis F) im seitlichen außen liegenden Bereich der Rückenlehne (2) angeordnet sind.

3. Sitz (1) nach einem der vorgenannten Ansprüche,
**dadurch gekennzeichnet, dass** mindestens zwei zusätzliche Verstellelemente (G, H) im Sitzkissen (4) vorgesehen sind, die durch die Ansteuerung in zeitlich aufeinander und in zeitlich auf die Verstellelemente (A bis F) in der Rückenlehne (2) abgestimmter Weise so aktiviert werden, dass auf den Rücken und das Becken des Benutzers eine Rotationsbewegung aufgebracht wird, die der Rotationsbewegung des Rückens und des Beckens beim Gehen vergleichbar ist.

4. Sitz (1) nach Anspruch 3,
**dadurch gekennzeichnet, dass** wenigstens ein zusätzliches Verstellelement (G, H) in der rechten und in der linken Hälfte des Sitzkissens (4) angeordnet ist.

5. Sitz (1) nach Anspruch 3 oder 4,
**dadurch gekennzeichnet, dass** die zusätzlichen Verstellelemente (G, H) im Anlagebereich der Sitzbeinhöcker eines Benutzers angeordnet sind.

6. Sitz (1) nach einem der vorgenannten Ansprüche,
**dadurch gekennzeichnet, dass** die Verstellelemente (A bis F) wie folgt angeordnet sind:
- A: rechter Schulterbereich
- B: linker Schulterbereich
- C: rechter Thoraxbereich
- D: linker Thoraxbereich
- E: rechter Lendenbereich
- F: linker Lendenbereich.

7. Ansteuerung für einen Sitz (1) nach Anspruch 6,
**dadurch gekennzeichnet, dass** die Verstellelemente (A bis F) wie folgt aktiviert werden:
a) A und D gleichzeitig, im Wechsel mit B und C gleichzeitig, oder
b) A und F gleichzeitig, im Wechsel mit B und E gleichzeitig, oder
c) A und D und E gleichzeitig, im Wechsel mit B und C und F gleichzeitig.

8. Sitz (1) nach einem der Ansprüche 1 bis 6,
**dadurch gekennzeichnet, dass** die Verstellelemente (A bis H) wie folgt angeordnet sind:
- A: rechter Schulterbereich
- B: linker Schulterbereich
- C: rechter Thoraxbereich
- D: linker Thoraxbereich
- E: rechter Lendenbereich
- F: linker Lendenbereich
- G: rechter Beckenbereich
- H: linker Beckenbereich.

9. Ansteuerung für einen Sitz (1) nach Anspruch 8,
**dadurch gekennzeichnet, dass** die Verstellelemente (A bis H) wie folgt aktiviert werden:
a) A und D gleichzeitig, im Wechsel mit B und C gleichzeitig, oder
b) A und F gleichzeitig, im Wechsel mit B und E gleichzeitig, oder
c) A und D und E gleichzeitig, im Wechsel mit B und C und F gleichzeitig, oder
d) A und D und E und H gleichzeitig, im Wechsel mit B und C und F und G gleichzeitig, oder
e) A und D und E und G gleichzeitig, im Wechsel mit B und C und F und H gleichzeitig.

10. Sitz (1) nach einem der Ansprüche 1 bis 6 und/oder 8,
**dadurch gekennzeichnet, dass** entlang der Höhenerstreckung der Rückenlehne (2) eine Mehrzahl von Massageelementen (11 bis 16) angeordnet ist.

11. Sitz (1) nach Anspruch 10,
**dadurch gekennzeichnet, dass** die Massageelemente (11 bis 16) symmetrisch zur Längsmittenebene (10) der Rückenlehne (2) in zwei Reihen, seitlich innerhalb der Verstellelemente (A bis F), angeordnet sind.

12. Sitz (1) nach Anspruch 11,
**dadurch gekennzeichnet, dass** jede Reihe sechs Massageelemente (11 bis 16) umfasst.

13. Sitz (1) nach einem der Ansprüche 10 bis 12,
**dadurch gekennzeichnet, dass** eine Ansteuerung vorgesehen ist, die die Massageelemente (11 bis 16) so ansteuert, dass die Massageelemente (11 bis 16) eine walzenartig abrollende Massagebewegung auf den Rücken des Sitzbenutzers ausüben.

14. Ansteuerung für einen Sitz (1) nach einem der Ansprüche 10 bis 13,
**dadurch gekennzeichnet, dass** die Aktivierung der Massageelemente (11 bis 16) auf die Aktivierung der Verstellelemente (A bis H) zeitlich abgestimmt ist.

## Claims

1. A seat (1), comprising a backrest (2) and a seat cushion (4), with a plurality of adjusting elements (A to F) in the backrest (2), which are arranged within the contact face of the backrest (2) facing a user and can carry out a lifting movement directed approximately perpendicular to the contact face,
**characterised in that** an activation device is provided, by means of which the adjusting elements (A to F) are activated in a mutually time-coordinated order in such a way that a rotational movement, which is comparable to the rotational movement of the back during walking, is applied to the back of the user, wherein the adjusting elements (A to F) are arranged in the following regions of the backrest (2):
- in the upper region (shoulder region),
- in the central region (thorax region) and/or
- in the lower region (lumbar region),
with at least one adjusting element (A to F) in each case in the right-hand and in the left-hand half of the backrest (2), wherein either the adjusting elements (A and D as well as B and C or A and F as well as B and E) are alternately activated, so that, obliquely opposite in each case, in other words vertically offset in the right-hand and the left-hand half of the backrest (2), a feed movement to the back of the seat user takes place or
an adjusting element in the shoulder region (A or B) and an adjusting element in the lumbar region (E or F) in the right-hand or the left-hand half of the backrest (2) are in each case activated together with an adjusting element in the thorax region (D or C) in the left-hand or right-hand half of the backrest (2), wherein the adjusting elements (A, D and E or B, C and F) are actuated alternately.

2. A seat (1) according to claim 1,
**characterised in that** the adjusting elements (A to F) are arranged in the lateral outer region of the backrest (2).

3. A seat (1) according to any one of the preceding claims,
**characterised in that** at least two additional adjusting elements (G, H) are provided in the seat cushion (4), which are activated by the activation device in a mutually time-coordinated manner and in a manner time-coordinated with respect to the adjusting elements (A to F) in the backrest (2) in such a way that a rotational movement, which is comparable to the rotational movement of the back and the pelvis during walking, is applied to the back and the pelvis of the user.

4. A seat (1) according to claim 3,
**characterised in that** at least one additional adjusting element (G, H) is arranged in the right-hand and in the left-hand half of the seat cushion (4).

5. A seat (1) according to claim 3 or claim 4,
**characterised in that** the additional adjusting elements (G, H) are arranged in the contact region of the ischial tuberosity of a user.

6. A seat (1) according to any one of the preceding claims, **characterised in that** the adjusting elements (A to F) are arranged as follows:
- A: right-hand shoulder region
- B: left-hand shoulder region
- C right-hand thorax region
- D: left-hand thorax region
- E: right-hand lumbar region
- F: left-hand lumbar region.

7. An activation device for a seat (1) according to claim 6, **characterised in that** the adjusting elements (A to F) are activated as follows:
a) A and D simultaneously, alternately with B and C simultaneously, or
b) A and F simultaneously, alternately with B and E simultaneously, or
c) A and D and E simultaneously, alternately with B and C and F simultaneously.

8. A seat (1) according to any one of claims 1 to 6,
**characterised in that** the adjusting elements (A to H) are arranged as follows:
- A: right-hand shoulder region
- B: left-hand shoulder region
- C right-hand thorax region
- D: left-hand thorax region
- E: right-hand lumbar region
- F: left-hand lumbar region
- G: right-hand pelvic region
- H: left-hand pelvic region.

9. An activation device for a seat (1) according to claim 8, **characterised in that** the adjusting elements (A to H) are activated as follows:
a) A and D simultaneously, alternately with B and C simultaneously, or
b) A and F simultaneously, alternately with B and E simultaneously, or
c) A and D and E simultaneously, alternately with B and C and F simultaneously, or
d) A and D and E and H simultaneously, alternately with B and C and F and G simultaneously, or
e) A and D and E and G simultaneously, alternately with B and C and F and H simultaneously.

10. A seat (1) according to any one of claims 1 to 6 and/or 8,
**characterised in that** a plurality of massage elements (11 to 16) is arranged along the height extent of the backrest (2).

11. A seat (1) according to claim 10,
**characterised in that** the massage elements (11 to 16) are arranged symmetrically with respect to the longitudinal centre plane (10) of the backrest (2) in two rows, laterally within the adjusting elements (A to F).

12. A seat (1) according to claim 11,
**characterised in that** each row comprises six massage elements (11 to 16).

13. A seat (1) according to any one of claims 10 to 12,
**characterised in that** an activation device is provided, which activates the massage elements (11 to 16) in such a way that the massage elements (11 to 16) exert a massage movement rolling in the manner of a roller on the back of the seat user.

14. An activation device for a seat (1) according to any one of claims 10 to 13,
**characterised in that** the activation of the massage elements (11 to 16) is time-coordinated with the activation of the adjusting elements (A to H).

## Revendications

1. Siège (1) ayant un dossier (2) et un coussin d'assise (4) et comprenant dans le dossier (2) une série d'éléments réglables (A à F) qui sont situés à la partie interne de la surface d'appui du dossier (2) tournée vers un utilisateur et peuvent effectuer un mouvement de déplacement orienté essentiellement perpendiculairement à la surface d'appui,
**caractérisé en ce qu'**
il est prévu un système de commande par lequel les éléments réglables (A à F) peuvent être activés selon une succession chronologiquement adaptée les uns par rapport aux autres de sorte que soit appliqué sur le dos de l'utilisateur un mouvement de rotation comparable au mouvement de rotation du dos lors de la marche, les éléments réglables (A à F) étant positionnés dans les zones suivantes du dossier (2) :
- dans la zone supérieure (zone d'épaule),
- dans la zone médiane (zone thoracique, et/ou
- dans la zone intérieure (zone lombaire),
avec au moins un élément réglable respectif (A à F) dans la moitié droite et dans la moitié gauche du dossier (2), siège dans lequel soit les éléments réglables (A et D ou B et C ou A et F ou B et E) sont activés en alternance, de façon à obtenir au niveau du dos de l'utilisateur du siège une distribution de mouvement respectivement opposée transversalement, donc décalée en hauteur dans la moitié droite et la moitié gauche du dossier (2),
soit respectivement un élément réglable situé dans la zone d'épaule (A ou B) et un élément réglable situé dans la zone lombaire (E ou F), dans la moitié droite ou dans la moitié gauche du dossier (2) est activé conjointement avec un élément réglable situé dans la zone thoracique (D ou C) dans la moitié gauche ou dans la moitié droite du dossier, les éléments réglable (A, D et E ou B, C et F) étant actionnés en alternance.

2. Siège (1) conforme à la revendication 1,
**caractérisé en ce que**
les éléments réglables (A à F) sont positionnés dans la zone latérale externe du dossier (2).

3. Siège (1) conforme à l'une des revendications précédentes,
**caractérisé en ce qu'**
il est prévu dans le coussin d'assise (4) au moins deux éléments réglables supplémentaires (G, H) qui sont activés par le système de commande d'une manière chronologiquement adaptée les uns aux autres et aux éléments réglables (A à F) situés dans le dossier (2) de façon à obtenir sur le dos et le bassin de l'utilisateur un mouvement de rotation qui peut être comparé au mouvement de rotation du dos et du bassin pendant la marche.

4. Siège (1) conforme à la revendication 3,
**caractérisé en ce qu'**
au moins un élément réglable supplémentaire (G, H) est positionné dans la moitié droite et dans la moitié gauche du coussin d'assise (4).

5. Siège (1) conforme à la revendication 3 ou 4,
**caractérisé en ce que**
les éléments réglables supplémentaires (G, H) sont positionnés dans la zone d'appui du fessier d'un utilisateur.

6. Siège (1) conforme à l'une des revendications précédentes,
**caractérisé en ce que**
les éléments réglables (A à F) sont positionnés de la manière suivante :
- A : zone d'épaule droite
- B : zone d'épaule gauche
- C : zone thoracique droite
- D : zone thoracique gauche
- E : zone lombaire droite
- F : zone lombaire gauche

7. Système de commande pour un siège (1) conforme à la revendication 6,
**caractérisé en ce que**
les éléments réglables (A à F) sont activés de la manière suivante :
a) A et D simultanément et en alternance avec B et C qui sont activés simultanément, ou
b) A et F simultanément, en alternance avec B et E qui sont activés simultanément, ou
c) A et D et E simultanément en alternance avec B et C et F qui sont activés simultanément.

8. Siège (1) conforme à l'une des revendications 1 à 6,
**caractérisé en ce que**
les éléments réglables (A à H) sont positionnés de la manière suivante :
- A : zone d'épaule droite,
- B : zone d'épaule gauche,
- C : zone thoracique droite,
- D : zone thoracique gauche,
- E : zone lombaire droite,
- F : zone lombaire gauche,
- G : zone de bassin droite,
- H : zone de bassin gauche.

9. Système de commande pour un siège (1) conforme à la revendication 8,
**caractérisé en ce que**
les éléments réglables (A à H) sont activés de la manière suivante :
a) A et D simultanément et en alternance avec B et C qui sont activés simultanément, ou
b) A et F simultanément et en alternance avec B et E qui sont activés simultanément, ou
c) A et D et E simultanément et en alternance avec B et C et F qui sont activés simultanément, ou
d) A et D et E et H simultanément et en alternance avec B et C et F et G qui sont activés simultanément, ou
e) A et D et E et G simultanément et en alternance avec B et C et F et H qui sont activés simultanément.

10. Siège (1) conforme à l'une des revendications 1 à 6 et/ou 8,
**caractérisé en ce que**
le long de l'extension en hauteur du dossier (2) est montée une série d'éléments de massage (11 à 16).

11. Siège (1) conforme à la revendication 10,
**caractérisé en ce que**
les éléments de massage (11 à 16) sont positionnés symétriquement par rapport au plan longitudinal médian (10) du dossier (2) en deux rangées, latéralement à la partie interne des éléments réglables (A à F).

12. Siège (1) conforme à la revendication 11,
**caractérisé en ce que**
chacune des rangées comprend six éléments de massage (11 à 16).

13. Siège (1) conforme à l'une des revendications 10 à 12,
**caractérisé en ce qu'**
il est prévu un système de commande qui commande les éléments de massage (11 à 16) de sorte que ces éléments de massage (11 à 16) effectuent un mouvement de massage en roulant comme des rouleaux sur le dos de l'utilisateur du siège.

14. Système de commande pour un siège (1) conforme à l'une des revendications 10 à 13,
**caractérisé en ce que**
l'activation des éléments de massage (11 à 16) est chronologiquement adaptée à l'activation des éléments réglables (A à H).
